# EUROPÄISCHE PATENTSCHRIFT

(11) **EP 3 440 753 B1**
(45) Veröffentlichungstag und Bekanntmachung des Hinweises auf die Patenterteilung: **09.08.2023**
(21) Anmeldenummer: 17715676.7
(22) Anmeldetag: 03.04.2017
(51) Int. Cl.: H02P 29/64, H02H 7/085, G01K 7/16, G01K 7/34, H02H 7/08, H02H 1/00

(54) **TEMPERATURÜBERWACHUNG**
TEMPERATURE MONITORING
CONTRÔLE DE TEMPÉRATURE

(30) Priorität: 08.04.2016 DE 102016106431
(43) Veröffentlichungstag der Anmeldung: 13.02.2019
(73) Patentinhaber: ebm-papst Mulfingen GmbH & Co. KG, 74673 Mulfingen (DE)
(72) Erfinder: SCHNEIDER, Fabian, 74585 Rot am See (DE); SCHROTH, Sebastian, 74635 Kupferzell (DE); WECKERT, Marco, 74677 Dörzbach-Hohebach (DE); WYSTUP, Ralph, 74653 Künzelsau (DE)
(74) Vertreter: Staeger & Sperling Partnerschaftsgesellschaft mbB
(86) Internationale Anmeldenummer: PCT/EP2017/057834
(87) Internationale Veröffentlichungsnummer: WO 2017/174495

(56) Entgegenhaltungen:
- EP-A2- 1 858 131
- DE-A1-102011 084 299
- US-A- 4 472 666
- US-A1- 2014 210 394
- US-A1- 2015 381 090

## Beschreibung

Die Erfindung betrifft eine Schaltung und ein Verfahren zum Überwachen der Temperatur und anderer Charakteristika der Wicklungsleitungen eines EC-Motors.

Im Stand der Technik sind Schaltungen zum thermischen Schutz und zur Leistungsregelung in Abhängigkeit von einer aktuellen Wicklungstemperatur von Strangwicklungen eines Elektromotors bekannt. Herkömmliche Schaltungen umfassen einerseits einen die Wicklungstemperatur der Strangwicklungen messenden Temperaturwächter-Schalter, der bei Erreichen einer bestimmten Wicklungstemperatur, der Schalttemperatur, ein Abschalten eines durch die Wicklungen fließenden Wicklungsstromes bewirkt, sowie einen den Strangwicklungen zugeordneten temperaturabhängigen Widerstand, der bei Erreichen einer bestimmten Wicklungstemperatur durch eine erfolgte Widerstandserhöhung z. B. eine Leistungsminderung der Motorleistung bewirkt.

Aus den Druckschriften DE 10 2013 107 819 A1, EP 1 303 021 A2 und EP 2184830 A1 sind zum Beispiel bekannte Schaltung zum thermischen Schutz und zur Leistungsregelung in Abhängigkeit von einer aktuellen Wicklungstemperatur von Strangwicklungen eines Elektromotors bekannt.

Weiter sind auch aus den Dokumenten US 2014/210394 A1 und DE 10 2011 084299 A1 alternative Lösungen zur Auswertung von Stromantworten bekannt.

Der Schutz eines dreisträngigen Elektromotors vor thermischer Überlastung wird bekannterweise durch drei Temperaturwächter-Schalter bewerkstelligt.

Die Temperatur jedes Motorstranges wird mit einem eigenen Temperaturwächter abgetastet, um auch unsymmetrische Temperaturerhöhungen, z. B. durch einen Wicklungsisolationsschaden erfassen zu können. Die drei Temperaturwächter-Schalter werden in Reihe geschaltet. Bei Überschreitung der Schalttemperatur eines der Temperaturwächter-Schalter öffnet dieser. Die Unterbrechung wird in einer Auswertelektronik erkannt und die für das jeweilige Schutzkonzept notwendige Aktion ausgelöst.

Auf Grund der Annahme, dass bei ordnungsgemäßer Funktion des Motors die Temperaturen in den drei Wicklungssträngen ungefähr gleich sind, wird typischerweise nur ein temperaturabhängiger Widerstand eingesetzt, um den Aufwand zu reduzieren. Um die Reihenschaltung der drei Temperaturwächter-Schalter durch eine Auswertelektronik auswerten zu können, werden zwei Verbindungen in die Signalelektronik benötigt. Ebenso werden für die Auswertung des temperaturabhängigen Widerstandes durch die Auswertelektronik zwei Verbindungen zur Elektronik benötigt. Also sind insgesamt vier Verbindungen zwischen dem Elektromotor und der Auswertelektronik erforderlich. Hieraus ergibt sich ein erhöhter Schaltungs- und Bauteilaufwand.

In herkömmlichen Motorschaltungen wird demnach zur Wicklungstemperaturbegrenzung entweder ein unmittelbar in die Motorwicklung eingebrachter Temperaturwächter/-schalter (Digital) oder Temperatursensor (Analog) eingesetzt. Dieser wird üblicherweise mit zwei zusätzlich zu den drei Wicklungsanschlüssen aus dem Motor herausgeführten Verbindungselementen (Kontakte, Leitungen) kontaktiert.

Ein digital wirkender Temperaturwächter/-schalter kann auch direkt in Serie zu den Wicklungssträngen in den Leistungspfad integriert werden. In ersterem Fall wird das Öffnen des Temperaturwächters bei Motorübertemperatur oder das Überschreiten einer Grenztemperatur des analogen Sensors durch die Elektronik detektiert und dadurch der Motorstrom unterbrochen. Dies hat unter anderem den Nachteil, dass zur Detektion zwei zusätzliche Verbindungselemente zwischen Motor und Elektronik, sowie eine zusätzliche Auswerteschaltung in der Elektronik benötigt werden.

Im zweiten Fall erfolgt die direkte Abschaltung bei Übertemperatur durch die direkte Abtrennung der Wicklungsstränge von der Elektronik mittels des Temperaturwächters selbst. Diese Lösung benötigt zwar keine zusätzlichen Leitungen, jedoch muss der Temperaturwächter für das sichere Abschalten des gesamten Motorstromes (auch bei Überstrom) ausgelegt sein. Ferner besteht ein Nachteil darin, dass der Wächter während des Normalbetriebs den gesamten Motorstrom führen muss.

Der Erfindung liegt deshalb die Aufgabe zugrunde, vorbesagte Nachteile zu überwinden und eine verbesserte Schaltung sowie ein Verfahren bereitzustellen mit dem auf einfache und zuverlässige Weise die Überwachung der Wicklungsleitungen und insbesondere der Temperatur möglich ist, ohne dass zusätzliche Leitungen und/oder Schaltelemente in den Wicklungsleitungen benötigt werden.

Diese Aufgabe wird durch die Merkmalskombination gemäß Patentanspruch 1 und Patentanspruch 5 gelöst.

Ein Grundgedanke der vorliegenden Erfindung ist darin zu sehen, dass zur Erfassung der Motortemperatur und Übermittlung der Temperatur zur Elektronik die drei vorhandenen Wicklungsanschlüsse der Maschine genutzt werden. Als Detektionsmechanismus zur Erfassung der Temperatur oder anderer Charakteristika von Strangwicklungen soll ferner eine Überstromerkennung bzw. Stromerfassungseinrichtung genutzt werden. Da in EC-Motoren und deren Umrichtern bzw. deren Kommutierungselektronik eine solche Stromerfassungseinrichtung üblicherweise vorhanden ist, bietet es sich an, diese in das erfinderische Konzept mit einzubeziehen. Die Temperaturüberwachung bzw. Überwachung der Charakteristika von Strangwicklungen wird mittels einer Antwortfunktion als Antwort auf ein spezifisches Messsignal (anregendes Signal) erhalten.

Erfindungsgemäß wird demnach eine elektronische Schaltung nach Anspruch 1 bereitgestellt, nämlich eine elektronische Schaltung zur Erfassung der aktuellen Wicklungstemperatur von Strangwicklungen und/oder anderen Charakteristika eines elektronisch kommutierten Elektromotors, der an einem Frequenzumrichter angeschlossen oder anschließbar ist vorgeschlagen, umfassend ein oder mehrere kapazitive Zweipole mit einer von der Temperatur abhängigen Impedanz, die jeweils parallel zu zwei Wicklungsanschlüssen der Strangwicklungen angeordnet sind sowie eine Stromerfassungseinrichtung als Detektor zum Erfassen der Stromantworten in den Strangwicklungen aufgrund von steilflankigen Spannungsänderungen des Frequenzumrichters. Besonders vorteilhaft ist es, wenn als Stromerfassungseinrichtung eine Stromerfassungseinrichtung des Umrichters oder einer Motorsteuerung verwendet wird, an den/die der Motor angeschlossen ist.

Weiter ist eine Signal-Auswerteeinrichtung vorgesehen, die mit dem Detektor verbunden ist.

Erfindungsgemäß werden die kapazitiven Zweipole zwischen die jeweils zu überwachende Strangwicklungen angebracht. Steilflankige Spannungsänderungen erzeugen an kapazitiven Elementen pulsfrequente Stromspitzen, welche durch die Stromerfassungseinrichtung auf der Elektronik erfasst werden können. Erfindungsgemäß wird daher als anregendes Signal die zur Regelung des Motors im Umrichter eingesetzte getaktete Arbeitsweise (wie z. B. Pulsweitenmodulation) mit deren steilflankigen Spannungshüben an den Motorklemmen genutzt. Aus der Antwortfunktion werden in der Stromerfassungseinrichtung mittels einer Signal-Analyse unmittelbar Rückschlüsse auf die Charakteristika der Strangwicklungen gezogen, somit auch auf deren Temperatur.

Weiter vorteilhaft ist es, wenn z. B. Soll-Referenzkurven für die Stromantwortfunktionen für einen zulässigen Soll-Bereich einer zu erfassenden Charakteristika, wie z. B. der Temperatur hinterlegt sind, so dass durch einen manuellen oder besser einen automatisierten Abgleich zwischen aktuellen Ist-Daten der Antwortfunktion und Soll-Daten erfasst werden kann, ob ein normaler Motorbetrieb vorliegt und z.B. die Motortemperatur im Normalbereich unterhalb eines Grenzwertes liegt.

Auf die oben beschriebene Weise wird die Frequenzanregung vom Umrichter zur Informationsauswertung genutzt. Erfindungsgemäß kann somit zur Detektion der Motorübertemperatur bzw. der Charakteristika der Strangwicklungen auf zusätzliche Schaltungsteile im Umrichter bzw. der Elektronik verzichtet werden.

Besonders vorteilhaft ist es, wenn je ein Zweipol parallel zu zwei Wicklungsanschlüssen der Motorwicklungen platziert wird, wobei der Zweipol als ein Zweipol mit einer von der Temperatur abhängigen Impedanz ausgebildet ist. Auf diese Weise kann die Motortemperatur indirekt über die, durch die Pulsweitenmodulation des Umrichters angeregten puls-, bzw. hochfrequenten Stromantworten erfasst werden.

In der Erfindung ist daher vorgesehen, dass aus der Antwortfunktion in der Stromerfassungseinrichtung mittels einer Signal-Analyse einer Signal-Auswerteeinrichtung die Temperatur der Strangwicklungen oder anderer Charakteristika des Motors ermittelt werden. Hierbei können z. B. die Amplitude, Phase oder Form entweder digital (Übertemperatur ja/nein) oder analog mit entsprechender Information über den Temperaturwert ausgewertet werden. Auch ist eine Übertragung von weiteren Information als Charakteristika des Motors (z.B. mehrere Temperaturen, Drehzahlen, Parameter und dergleichen) durch die gezielte Modulation der Impedanz des Zweipols mittels einer aktiven Schaltung sowohl analog als auch digital (z.B. als serieller Datenstrom) möglich. Bevorzugt wird daher eine aktive Schaltung zur Modulation der Impedanz der Zweipole vorgesehen, um aus entweder der Amplitude, der Phase oder der Form der entsprechenden Antwortfunktion die zu ermittelnde Charakteristika des Motors oder die Temperatur der Strangwicklungen zu erhalten.

Ein weiterer Aspekt der vorliegenden Erfindung betrifft ein Verfahren nach Anspruch 5, nämlich zur Erfassung der aktuellen Wicklungstemperatur und/oder anderen Charakteristika eines elektronisch kommutierten Elektromotors unter Verwendung einer wie zuvor beschriebenen elektronischen Schaltung mit den folgenden Schritten:
- Betreiben eines Motors an einem Frequenzumrichter und
- Erfassen der Stromantworten in den Strangwicklungen aufgrund der steilflankigen Spannungsänderungen am Ausgang des Frequenzumrichters mittels des Detektors der Schaltung als Antwortsignal auf ein anregendes Signal sowie Durchführen einer Signal-Analyse mit der Stromerfassungseinrichtung, um daraus die Temperatur der Strangwicklungen oder andere Charakteristika des Motors zu erhalten.

Das Verfahren sieht weiter vor, dass als anregendes Signal die zur Regelung des Motors im Umrichter eingesetzte getaktete Arbeitsweise (wie z. B. Pulsweitenmodulation) mit deren steilflankigen Spannungshüben an den Motorklemmen genutzt wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Ausführungsbeispiel einer erfindungsgemäßen elektronischen Schaltung
- Fig. 2a-f: Ausführungsbeispiele von Zweipolen mit variabler Impedanz,
- Fig. 3: ein weiteres Ausführungsbeispiel eines Zweipols mit gezielt steuerbarer Impedanz,
- Fig. 4: ein weiteres Ausführungsbeispiel mit einer Parameterabhängigkeit und
- Fig. 5: Stromantwort im Summenstrom, gemessen am ZwischenkreisShuntwiderstand Rs und in den Motorphasenströmen, gemessen an den Messpunkten 30u, 30v und 30w.

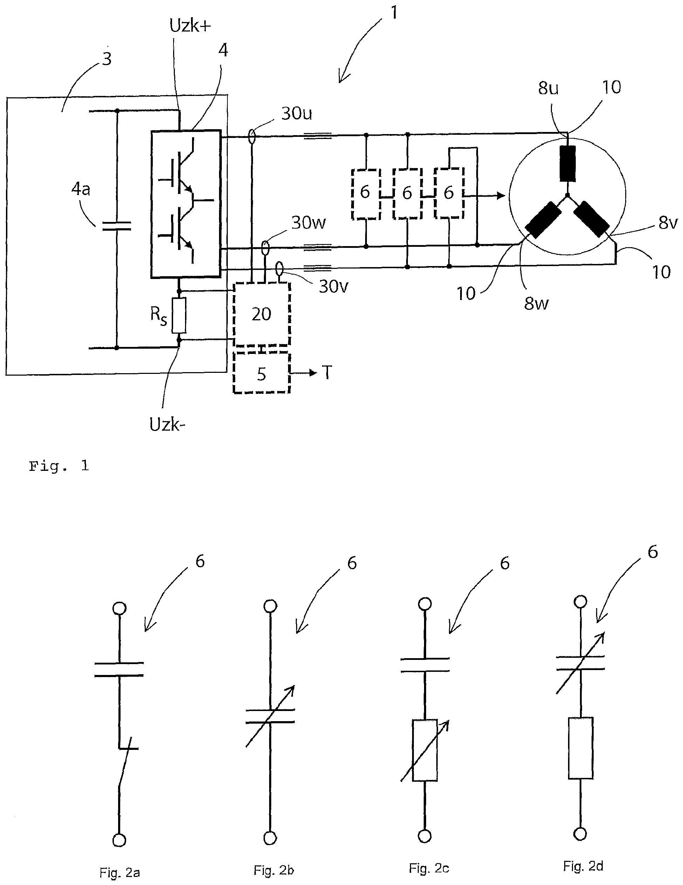

Im Folgenden wird die Erfindung anhand der Figuren 1 bis 5 näher beschrieben, wobei gleiche Bezugszeichen auf gleiche funktionale und/oder strukturelle Merkmale hinweisen.

In der Figur 1 ist ein Ausführungsbeispiel einer erfindungsgemäßen elektronischen Schaltung 1 mit drei auf der Motorseite eingebundenen Zweipolen zur Temperaturerfassung. Diese elektronische Schaltung 1 dient der Erfassung der aktuellen Wicklungstemperatur der Strangwicklungen 10 des elektronisch kommutierten Elektromotors 2, der über einen schematisch dargestellten Frequenzumrichter 3 an ein Zwischenkreispotential angeschlossen ist. Gezeigt sind drei kapazitive Zweipole 6 mit einer von der Temperatur abhängigen Impedanz, die jeweils parallel zu zwei Wicklungsanschlüssen 8u, 8v, 8w der Strangwicklungen 10 angeordnet sind. Ferner ist ein Detektor 20 und zwar eine Stromerfassungseinrichtung 20 zum Erfassen der Stromantworten in den Motorzuleitungen 30 aufgrund von steilflankigen Spannungsänderungen am Ausgang des Frequenzumrichters 3 vorgesehen.

In dieser Ausführung kann die Erfassung der hochfrequenten Stromantworten direkt über ein oder mehrere Motorstrangströme und/oder ein bis drei, in die Verbindung der Lowside-Schalter zum negativen Zwischenkreisanschluss U_{zk-} geschaltete, vorzugsweise niederohmigen Shuntwiderstände Rₛ erfolgen.

Ferner ist eine Signal-Auswerteeinrichtung 5 mit der Stromerfassungseinrichtung 20 verbunden. Durch die Analyse der Stromantworten kann die Wicklungstemperatur oder allgemein eine auf die Impedanz modulierte Information aus den Stromantworten zurückgewonnen werden.

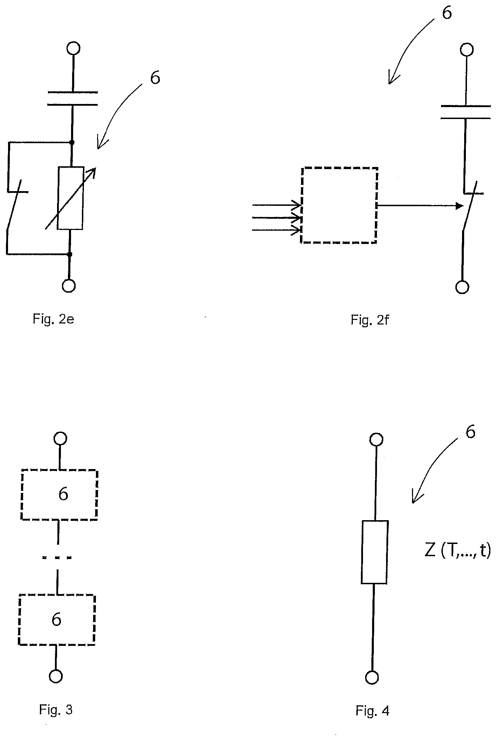

In den Figuren 2a - 2f sind alternative Ausführungen der in Figur 1 dargestellten Zweipole 6 mit variabler Impedanz gezeigt. Dabei sind auch beliebige Kombinationsformen der dargestellten Varianten der Zweipole 6, wie in der Figur 3 schematisch dargestellt, möglich. Je nach Charakteristik der Zweipole 6, ändern sich die Form, Amplitude oder der Verlauf der Stromantwortfunktionen, so dass diese abhängig von den konkret verwendeten Zweipolen 6 mittels der Signal-Auswerteeinrichtung 5 entsprechend der passenden Analyse bzw. Referenz auszuwählen sind.

Die Figur 4 stellt eine ganz allgemeine Ausführung eines Zweipols dar, welche eine gezielter Steuerung bzw. Parameterabhängigkeit der Impedanz aufweist. Die Parameterabhängigkeit der Impedanz, wie z. B. eine Impedanzabhängigkeit von der Temperatur der Strangwicklungen kann unmittelbar zur Ermittlung der Temperatur aus den Antwortfunktionen mit geeigneten Analysen extrahiert werden

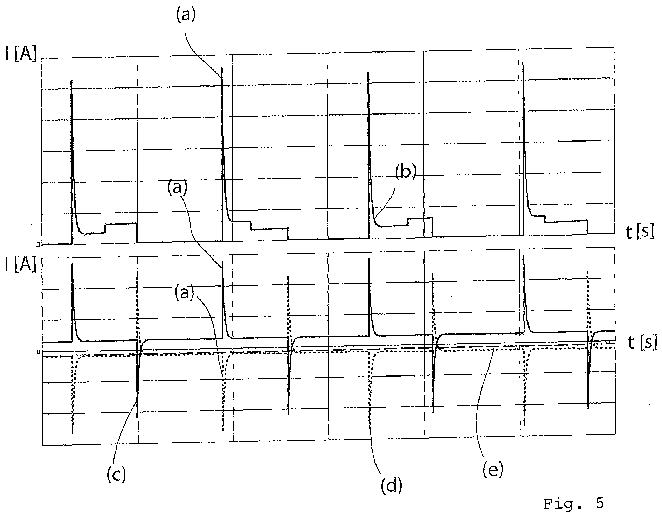

In der Figur 5 sind beispielhaft die Stromantworten im Summenstrom, gemessen am Zwischenkreis-Shuntwiderstand Rs (oben) und in den Motorphasenströmen, gemessen an den Messpunkten 30u, 30v und 30w (unten) dargestellt. Die darin jeweils enthaltenen Strompeaks werden analysiert und geben die Information über die Wicklungstemperatur oder andere Charakteristika des Motors. Die Information kann z.B. durch Analyse der Amplitude oder Form, der auf den Betriebsstrom des Motors modulierten Strompeaks gewonnen werden. Im einfachsten Fall kann dies ein Überstromdetektor (Komparator) sein, der das Auftreten der in ihrer Amplitude den Betriebsstrom wesentlich überschreitenden Peaks detektiert und somit eine Überhitzung der Wicklung signalisiert und eine Abschaltung auslöst.

Dabei zeigen die Kurven (a) die jeweilige Stromantwort (Strompeaks) bedingt durch den kapazitiven Zweipol 6 zwischen den Klemmen 8u und 8v. Die Kurve (b) zeigt den Summenstrom am Shunt-Widerstand Rs, wobei das Diagramm 2 Perioden der PWM-Modulation des Frequenzumrichters.

Die untere durchgezogene Kurve (c) repräsentiert den Phasenstrom am Messpunkt 30u. Die untere gepunktete Kurve (d) repräsentiert den Phasenstrom am Messpunkt 30v und die untere gestrichelte Kurve (e) repräsentiert den Phasenstrom am Messpunkt 30w.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Die Erfindung wird somit nur durch den Gegenstand der unabhängigen Ansprüche 1 und 5 beschränkt.

## Patentansprüche

1. Elektronische Schaltung (1) zur Erfassung der aktuellen Wicklungstemperatur von Strangwicklungen (10) und/oder anderen Charakteristika eines elektronisch kommutierten Elektromotors (2), der an einem Frequenzumrichter (3) angeschlossen oder anschließbar ist, **dadurch gekennzeichnet, dass**
die elektronische Schaltung (1) umfasst ein oder mehrere kapazitive Zweipole (6) mit einer von der Temperatur der Strangwicklungen (10) abhängigen Impedanz, welche zur Erfassung anderer Charakteristika modulierbar ist, wobei die Zweipole (6) jeweils elektrisch parallel zu zwei Wicklungsanschlüssen (u, v, w) der Strangwicklungen (10) angeordnet sind, wobei
die elektronische Schaltung (1) ferner eine Stromerfassungseinrichtung (20) umfasst, welche ausgebildet ist, von der Impedanz der Zweipole (6) abhängige Stromantworten in Form pulsfrequenter Stromspitzen in den Strangwicklungen (10) als Reaktion auf eine von dem Frequenzumrichter durch Pulsweitenmodulation erzeugte Spannungsanregung mit steilflankigen Spannungsänderungen zu erfassen, und wobei
die elektronische Schaltung (1) eine Signal-Auswerteeinrichtung (5) umfasst, die zur Signal-Analyse der mit der Stromerfassungseinrichtung erfassten Stromantworten ausgebildet ist, um daraus die Temperatur der Strangwicklungen (10) oder anderer Charakteristika des Elektromotors (2) zu erhalten.

2. Elektronische Schaltung (1) gemäß Anspruch 1, **dadurch gekennzeichnet, dass** als Stromerfassungseinrichtung (20) eine Stromerfassungseinrichtung des Umrichters (3) oder einer Motorsteuerung vorgesehen ist.

3. Elektronische Schaltung (1) gemäß einem der vorhergehenden Ansprüche, **dadurch gekennzeichnet, dass** ferner die Signal-Auswerteeinrichtung (5) mit der Stromerfassungseinrichtung (20) verbunden ist.

4. Elektronische Schaltung (1) gemäß einem der vorhergehenden Ansprüche, **dadurch gekennzeichnet, dass** eine aktive Schaltung zur Modulation der Impedanz der Zweipole (6) vorgesehen ist, um aus entweder der Amplitude, der Phase oder der Form der entsprechenden Stromantwort in Form pulsfrequenter Stromspitzen die zu ermittelnde Charakteristika des Elektromotors (2) oder die Temperatur der Strangwicklungen (10) zu erhalten.

5. Verfahren zur Erfassung der aktuellen Wicklungstemperatur und/oder anderen Charakteristika von Strangwicklungen (10) eines elektronisch kommutierten Elektromotors (2) unter Verwendung einer elektronischen Schaltung (1) gemäß einem der Ansprüche 1 bis 4 mit den folgenden Schritten:
a. Betreiben des Elektromotors (2) an einem Frequenzumrichter (3) und
b. Erfassen der Stromantworten in Form pulsfrequenter Stromspitzen in den Strangwicklungen (10) als Reaktion auf steilflankige Spannungsänderungen mittels der Stromerfassungsvorrichtung (20) der Schaltung (1) und
Durchführen einer Signal-Analyse der mit der Stromerfassungseinrichtung (20) erfassten Stromantworten mit der Signal-Auswerteeinrichtung (5), um daraus die Temperatur der Strangwicklungen (10) oder anderer Charakteristika des Elektromotors (2) zu erhalten.

6. Verfahren nach Anspruch 5, wobei in Schritt b) eine zur Regelung des Elektromotors (2) im Umrichter eingesetzte getaktete Arbeitsweise mit deren steilflankigen Spannungshüben an den Motorklemmen genutzt wird.

## Claims

1. An electronic circuit (1) for detecting the current winding temperature of phase windings (10) and/or other characteristics of an electronically commutated electric motor (2), which is connected, or can be connected, to a frequency converter (3), **characterized in that** the electronic circuit (1) comprising one or more capacitive two-terminal networks (6) with a temperature of the phase windings (10) dependent impedance, which can be modulated for detecting other characteristics, wherein the two-terminal networks (6) each being arranged electrically parallel to two winding terminals (u, v, w) of the phase windings (10), wherein the electronic circuit (1) further comprising a current detecting device (20), which is formed to detect the current responses dependent from the two-terminal networks (6) in the form of pulse-frequency current peaks in the phase windings (10) as a response of the steep-flanked voltage excitations of the frequency converter by means of pulse width modulation, and wherein **in that** the electronic circuit (1) comprises a signal evaluating device (5), configured to signal analysis of the current responses detected by the current detecting device (20), to obtain therefrom the temperature of the phase windings (10) or other characteristics of the electric motor (2)

2. The electronic circuit (1) as claimed in claim 1, **characterized in that** a current detecting device of the converter (3) or a motor control unit is provided as the current detecting device (20).

3. The electronic circuit (1) as claimed in one of the preceding claims, **characterized in that** furthermore the signal evaluating device (5) is connected to the current detecting device (20).

4. The electronic circuit (1) as claimed in one of the preceding claims, **characterized in that** an active switching is provided for the modulation of the impedance of the two-terminal networks (6), in order to obtain from either the amplitude, the phase, or the form of the corresponding current response in the form of pulse-frequency current peaks the characteristics to be determined for the electric motor (2) or the temperature of the phase windings (10).

5. A method for detecting the current winding temperature and/or other characteristics of phase windings (10) of an electronically commutated electric motor (2) making use of an electronic circuit (1) as claimed in one of claims 1 to 4, having the following steps:
a. operating the electric motor (2) at a frequency converter (3) and
b. detecting the current responses in the form of pulse-frequency current peaks in the phase windings (10) as a response of the steep-flanked voltage changes by means of the current detecting device (20) of the circuit (1) and
Performing signal analysis of the current responses detected by the current detecting device (20) with the signal evaluating device (5) to obtain therefrom the temperature of the phase windings (10) or other characteristics of the electric motor (2).

6. The method as claimed in claim 5, wherein in step b) a clocked operation with its steep-flanked voltage swings at the motor terminals which is used in the converter for the regulating of the electric motor (2) is utilized.

## Revendications

1. Circuit électronique (1) pour détecter la température actuelle d'enroulement d'enroulements de phase (10) et/ou d'autres caractéristiques d'un moteur électrique à commutation électronique (2) qui est connecté ou peut être connecté à un convertisseur de fréquence (3), **caractérisé en ce que** le circuit électronique (1) comprend un ou plusieurs réseaux bibornes capacitifs (6) dont l'impédance dépend de la température des enroulements de phase (10) et qui peut être modulée pour détecter d'autres caractéristiques, dans lequel chaque réseau biborne (6) est électriquement parallèle à deux connexions d'enroulement (u, v, w) des enroulements de phase (10),
dans lequel le circuit électronique (1) comprend en outre un dispositif de détection de courant (20) qui est conçu pour détecter des réponses de courant dépendant de l'impédance des réseaux bibornes (6) sous la forme de pics de courant à fréquence impulsionnelle dans les enroulements de phase (10) en réaction à une excitation de tension générée par le convertisseur de fréquence par modulation de largeur d'impulsion avec des variations de tension abruptes,
et dans lequel le circuit électronique (1) comprend un dispositif d'évaluation de signal (5) qui est conçu pour l'analyse de signal des réponses de courant détectées par le dispositif de détection de courant afin d'obtenir à partir de celle-ci la température des enroulements de phase (10) ou d'autres caractéristiques du moteur électrique (2).

2. Circuit électronique (1) selon la revendication 1, **caractérisé en ce qu'**un dispositif de détection de courant du convertisseur (3) ou d'une commande de moteur est prévu en tant que dispositif de détection de courant (20).

3. Circuit électronique (1) selon l'une des revendications précédentes, **caractérisé en ce que** le dispositif d'évaluation de signal (5) est également connecté au dispositif de détection de courant (20).

4. Circuit électronique (1) selon l'une des revendications précédentes, **caractérisé en ce qu'**un circuit actif de modulation de l'impédance des réseaux bibornes (6) est prévu pour obtenir à partir de soit l'amplitude, soit la phase, soit la forme de la réponse de courant correspondante sous la forme de pics de courant à fréquence impulsionnelle les caractéristiques du moteur électrique (2) à déterminer ou la température des enroulements de phase (10).

5. Procédé de détection de la température actuelle d'enroulement et/ou d'autres caractéristiques des enroulements de phase (10) d'un moteur électrique à commutation électronique (2) à l'aide d'un circuit électronique (1) selon l'une des revendications 1 à 4, comportant les étapes suivantes :
a. fonctionnement du moteur électrique (2) sur un convertisseur de fréquence (3) et
b. détection des réponses de courant sous la forme de pics de courant à fréquence impulsionnelle dans les enroulements de phase (10) en réaction à des variations de tension abruptes au moyen du dispositif de détection de courant (20) du circuit (1) et
réalisation par le dispositif d'évaluation de signal (5) d'une analyse de signal des réponses de courant détectées par le dispositif de détection de courant (20) afin d'obtenir la température des enroulements de phase (10) ou d'autres caractéristiques du moteur électrique (2).

6. Procédé selon la revendication 5, dans lequel à l'étape b) un mode de fonctionnement cadencé utilisé dans le convertisseur pour la régulation du moteur électrique (2) avec ses oscillations de tension abruptes est utilisé aux bornes du moteur.
